## Europäisches Patentamt
## European Patent Office
## Office européen des brevets

(11) Veröffentlichungsnummer: **0 135 800**
**B1**

# EUROPÄISCHE PATENTSCHRIFT

(45) Veröffentlichungstag der Patentschrift:
14.12.88

(51) Int. Cl.⁴: **F 16 F 15/04**

(21) Anmeldenummer: **84109992.2**

(22) Anmeldetag: **22.08.84**

(54) **Mit Federn ausgerüsteter mechanischer Schwingungsdämpfer.**

(30) Priorität: **31.08.83 CH 4784/83**

(43) Veröffentlichungstag der Anmeldung:
**03.04.85 Patentblatt 85/14**

(45) Bekanntmachung des Hinweises auf die Patenterteilung:
**14.12.88 Patentblatt 88/50**

(84) Benannte Vertragsstaaten:
**DE**

(56) Entgegenhaltungen:
**CH-A-348 010**
**DE-A-707 778**
**FR-A-2 455 697**
**US-A-2 454 538**
**US-A-2 580 815**
**US-A-2 901 703**
**US-A-3 185 428**
**US-A-3 417 984**
**US-A-3 727 865**

(73) Patentinhaber: **Rudolf Schrepfer AG,
Eigenheimstrasse 22, CH- 8700 Küsnacht- Zürich
(CH)**

(72) Erfinder: **Schrepfer, Rudolf, Hesligenstrasse 30,
CH- 8700 Küsnacht (CH)**

(74) Vertreter: **Blumbach Weser Bergen Kramer
Zwirner Hoffmann Patentanwälte,
Radeckestrasse 43, D-8000 München 60 (DE)**

**Beschreibung**

Die Erfindung betrifft Schwingungsdämpfer, wie sie in der Fachwelt auch unter dem Namen Schwingungisolator bekannt sind, und zum Dämpfen von sehr niederfrequenten mechanischen Schwingungen eingesetzt werden. Bekanntlich können gegenwertig Apparate, Maschinen oder ganze industrielle Anlagen, deren Störfrequenz um 10 Hz oder darunter liegt nur in Ausnahmefällen und dann mit sehr großem technischen Aufwand wirksam isoliert werden. Bekannt sind hierzu beispielsweise die sogenannten "Silent-Blocks", welche grundsätzlich aus einem gummielastischen Stoff bestehen.

Die Wirksamkeit einer Schwingungsisolationen steht bekanntlich in direktem Zusammenhang mit der Eigenfrequenz des Systems aus Isolator und zu isolierendem Gegenstand. Diese Eigenfrequenz sollte nach Möglichkeit unterhalb der Störfrequenz liegen.

Aus der CH-A-348 010 ist ein Schwingungsdämpfer bekannt, der vor allem im Hinblick darauf ausgestaltet ist, daß er gleich gut in liegender, stehender oder hängender Lage verwendet werden kann. Der bekannte Schwingungsdämpfer umfaßt ein starres, dreieckförmiges Grundgestell aus U-Profilen, die so miteinander verbunden sind, daß ihre offenen Seiten zum inneren des Dreiecks weisen. In jedem der drei U-Profile befindet sich eine Stange, die an ihren beiden Enden dem Bereich der entsprechenden Ecken des Dreiecks elastisch gelagert ist. Im Inneren des Dreiecks befindet sich eine dreieckförmige Platte, in der ein pfostenartiges Teil vorgesehen ist und das von diesem ausgehend drei zu den jeweiligen Ecken verlaufende Versteifungsrippen aufweist. An den Ecken dieser dreieckförmigen Platte sind Lager angebracht, welche mittels Hülsen gleitbar mit den vorgenannten Stäben verbunden sind. Von zwei gegeneinander zu isolierenden Teilen wird das eine mit dem Grundrahmen und das andere mit dem pfostenartigen Teil der dreieckförmigen Platte verbunden.

Aufgabe der Erfindung ist es, einen Schwingungsdämpfer verfügbar zu machen, der zu einer niedrigeren Eigenfrequenz führt und gleichzeitig eine maximale Steifigkeit quer zur Dämpfungsrichtung aufweist, welcher gleichzeitig wenig Platz, insbesondere eine geringe Bauhöhe, beansprucht und dessen Charakteristik dennoch jederzeit einfach verstellbar ist.

Der erfindungsgemäße Schwingungsdämpfer ist durch die Merkmale des Anspruches 1 gekennzeichnet.

Die auf den Tragplatten angeordneten Stützen sind vorteilhaft als Leisten ausgebildet, die senkrecht zu den Mittellinien der auf ihnen ruhenden Blattfederabschnitte verlaufen. Die Spannglieder bzw. Verbinder können die überstehenden Abschnitte der Blattfederabschnitte durchsetzende, in den Tragplatten eingeschraubte Schraubenbolzen sein. Dadurch ergeben sich rechtwinklig zur Federlänge verlaufende Linienauflagen und somit eine maximale Ausnützung der elastischen Eigenschaften der jeweiligen federnden Glieder. So kann eine regulierbare Vorspannung der Blattfederabschnitte erzielt werden und damit eine einheitliche Lastaufnahme auch bei nicht zentrischer Schwerpunktlage des die Schwingungen durchführenden Körper beispielsweise einer Maschine erreicht werden.

Die Blattfedersätze können geradlinig verlaufende oder bogenförmig ausgebildete Blattfederstreifen enthalten. Während sich die geradlinig verlaufenden Blattfederabschnitte unter einer Last in bekannter Weise durchbiegen, biegen sich bogenförmige Abschnitte unter Last nicht nur durch, sondern sie verdrehen sich zusätzlich. Hier kann also unter Last eine Verwindung entstehen.

Nachfolgend wird der Erfindungsgegenstand anhand der Zeichnungen beispielsweise näher erläutert.

Es zeigt:

Fig. 1    eine Aufsicht auf eine erste Ausführung eines erfindungsgemäßen Schwingungsdämpfers, Fig. 2    schaubildlich die Einzelheit A der Fig. 1,

Fig. 3    den Aufbau eines gemäß der Fig. 1 ausgebildeten Schwingungsdämpfers,

Fig. 4    eine Darstellung gleich derjenigen der Fig. 3 eines Schwingungsdämpfers mit kreisabschnittsförmigen Federabschnitten,

Fig. 5    Darstellungen gleich denjenigen
und 6    der Fig. 3 jedoch weiterer Ausführungen des erfindungsgemäßen Schwingungsdämpfers, und

Fig. 7    einen Schwingungsdämpfer dessen Blattfederabschnitte einstückig miteinander in Form eines Kreisringes ausgebildet sind.

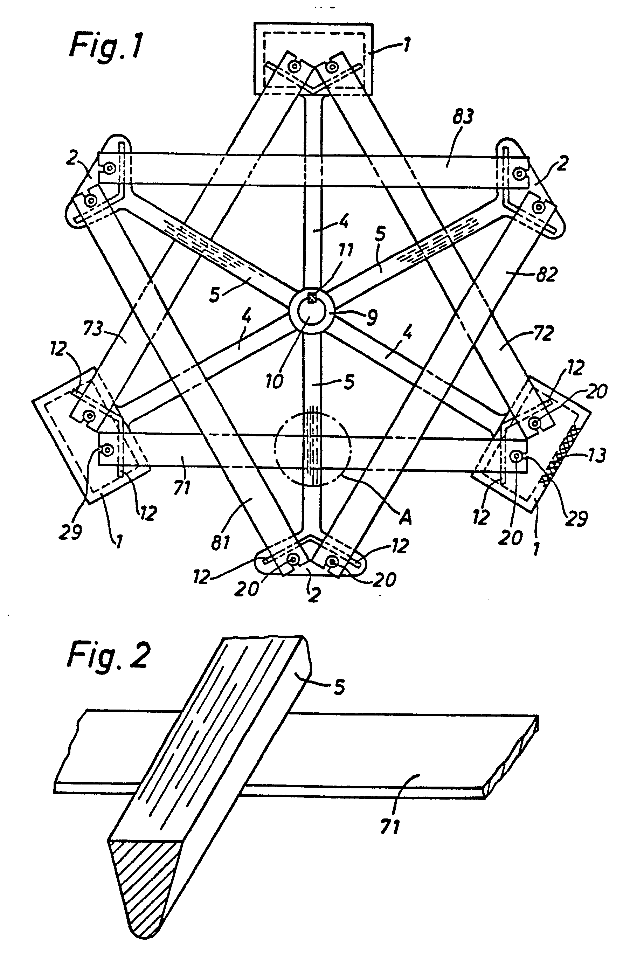

In Fig. 1 ist eine Aufsicht auf einen Schwingungsdämpfer dargestellt. Dabei kann man von verschiedenen strukturellen Schichten oder Ebenen sprechen. Dieser Schwingungsdämpfer sei als beispielsweise Ausführung zur Abstützung einer Maschine auf einem Werkhallenboden bestimmt.

Die unterste strukturelle Ebene ist von einem starren Armkreuz gebildet. Dieses weist drei Arme 4 auf. In der Mitte des Armkreuzes sind diese Arme 4 mit einer Führungsbüchse 9 starr verbunden. Bei ihren äußersten, d. h. distalen Enden ist jeder Arm 4 mit einer Tragplatte 1 starr verbunden. Über diese drei Tragplatten 1 ist der Schwingungsdämpfer auf dem Boden abgestützt. Dabei können die Tragplatten 1 zusätzlich mit einem Gleitschutz 13 versehen sein. Bei verschiedenen Ausführungen können diese Tragplatten 1 mit "AIR-LOC" (Handelsmarke)-Gleitschutzplatten bestückt sein. Diese sind in der Fachwelt bekannt und müssen daher nicht näher beschrieben werden. Die Tragplatten 1 können als solche lose auf einem jeweiligen Untergrund aufgestellt sein. Bei anderen Ausführungen besteht jedoch die Möglichkeit, diese Tragplatten 1 im jeweiligen Boden zu verankern.

Auf jeder Tragplatte 1 sind zwei Leisten 12 angeordnet. Weiter sind die Tragplatten 1 mit Verbindern, hier Schraubbolzen 20 ausgerüstet. Es ist zu bemerken, daß als Verbinder auch andere Bauelemente vorhanden sein können. Auch kann der Verbinder durch eine unlösbare Verbindung, z. B. Schweißstelle gebildet sein. Diese obigen Bausteine bilden nun die unterste Schicht des Schwingungsdämpfers. Die zweite Schicht wird von drei geradlinig verlaufenden Blattfedern 71, 72 und 73 gebildet. Diese in Form eines gleichseitigen Dreiecks angeordneten Blattfedern 71, 72 und 73 liegen bei ihren Endbereichen auf jeweils einer Leiste 12 der darunter liegenden Tragplatte 1 auf. In den bei den Leisten 12 überstehenden Abschnitten der Blattfedern sind Ausnehmungen 29 ausgebildet. Die Schraubbolzen 20 durchsetzen diese Ausnehmungen 29. Damit ist jeder Blattfederabschnitt auf der Tragplatte 1 aufgespannt. Es ist nun offensichtlich, daß die Federspannung durch diese Schraubenbolzen verändert werden kann, so daß die Vorspannung innerhalb Grenzen wählbar ist. Die Leisten 12 verlaufen senkrecht zu den Blattfederabschnitten 71, 72 und 73, so daß eine maximale Ausnützung der elastischen Eigenschaften derselben sichergestellt ist.

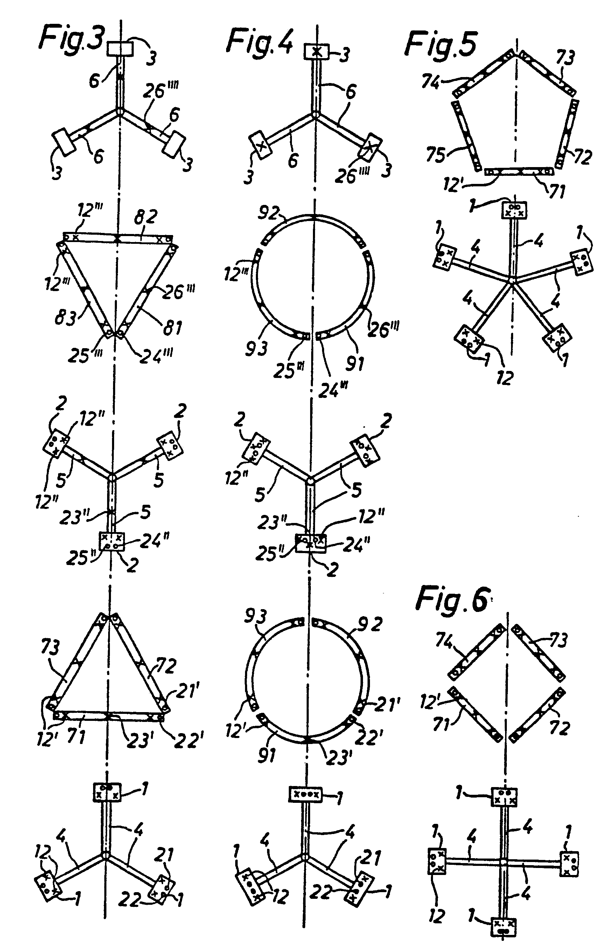

Die dritte Schicht des Schwingungsdämpfers ist wieder durch ein Armkreuz gebildet. Dieses weist weitere starre Arme 5 auf. In der Mitte des Armkreuzes sind die Arme 5 wieder mit einer Führungsbüchse 9, die von der darunter gelegenen Führungsbüchse getrennt ist, fest verbunden. Die äußersten Enden der Arme 5 sind mit Tragplatten 2 ausgerüstet. Diese Tragplatten 2 weisen wiederum Leisten 12 und Schraubbolzen 20 auf. Die Arme 5 liegen auf den darunter liegenden Blattfederabschnitten 71, 72 und 73 auf. Dabei wird auf die Fig. 2 verwiesen, die das Detail A der Fig. 1 schaubildlich und in vergrößertem Maßstab darstellt. In Fig. 2 ist ein Teil beispielsweise des Blattfederabschnittes 71 sowie der darüber liegende Arm 5 des oberen Armkreuzes dargestellt. Der Arm 5 weist eine keilförmige Querschnittsform mit abgerundetem Scheitelbereich auf. Damit ergibt sich auch hier eine linienförmige Auflage des Armes 5 auf dem Blattfederabschnitt 71. Das obere Armkreuz mit den Armen 5 ist relativ zum unteren Armkreuz mit den Armen 4 um einen Winkel gedreht angeordnet, der die Hälfte des Winkelabstandes zwischen den jeweiligen Armen beträgt. Damit liegen die Arme 5 genau auf der Mitte der darunter liegenden Blattfederabschnitte 71, 72, 73 auf.

Die vierte Schicht ist wiederum durch im gleichseitigen Dreieck angeordnete Blattfederabschnitte 81, 82, 83 gebildet. Wie unten auf Fig. 1 ersichtlich ist, liegen diese Blattfederabschnitte 81, 82, 83 bei ihren Enden auf den senkrecht dazu verlaufenden Leisten 12 der Tragplatten 2 auf und sind mittels Schraubbolzen 20 mit diesen verbunden.

Um ein relatives Verdrehen der übereinander geschichteten Armkreuze zu verhindern, sind ihre Hülsen 9 von einer Stange 10 durchsetzt, welche Stange durch jeweils einen Keil 11 mit den Führungsbüchsen 9 verbunden ist.

Je nach dem vorgesehenen Einsatz können nun beliebig viele Armkreuze und im Dreieck vorliegende Blattfedersätze abwechslungsweise übereinander geschichtet werden.

Es wird nun auf die Fig. 3 hingewiesen. Hier ist ein gleich der Fig. 1 ausgebildeter Schwingungsdämpfer zur näheren Erläuterung in einem auseinandergezogenen Zustand dargestellt. Dabei sind verschiedene Einzelheiten, wie beispielsweise die Stange 10, nicht gezeichnet. Die Leisten 12 sind schematisch dargestellt.

In den einzelnen Zeichnungen der Fig. 3 und auch der Fig. 4, 5 und 6 sind diejenigen Verbindungsstellen, bei denen mittels eines Schraubenbolzens eine feste Verbindung hergestellt ist, mit einem kleinen Kreis angedeutet, und Auflagestellen, einschließlich der bei den Leisten 12 vorhandenen, sind mit einem x angedeutet. Das in der Fig. 3 auf dem Zeichnungsblatt zuunterst liegende Armkreuz sei zur Auflage auf einem Maschinenhausboden bestimmt. Gezeichnet sind dessen Arme 4 und die Tragplatten 1 mit den Leisten 12, welche die Linien-Auflage der Federn sichern. Es sind drei Arme 4 vorhanden. Auf diesem Armkreuz sind die Blattfederabschnitte 71, 72, 73 als zweite Schicht vorhanden. Dabei ist beispielsweise der Blattfederabschnitt 72 bei der Stelle 21' über den Schraubenbolzen mit der Stelle 21 der Tragplatte 1 verbunden und der Blattfederabschnitt 71 ist beispielsweise bei der Stelle 22' mit der Tragplatte 1 verbunden. Das Blattfederabschnittdreieck liegt also an seinen Stellen 12' linienförmig bei den Leisten 12 auf dem Armkreuz auf und ist bei den jeweiligen äußeren Stellen damit verbunden. Über diesem Blattfederabschnittdreieck ist nun ein weiteres Armkreuz angeordnet. Dieses weist drei Arme 5 und die Tragplatten 2 auf. Dieses Armkreuz liegt nun auf dem soeben beschriebenen Blattfederabschnittdreieck auf. Die Auflagestellen sind mit x bezeichnet. Entsprechend liegt beispielsweise der auf dem Zeichnungsblatt senkrecht verlaufende Arm 5 bei der Stelle 23'' auf der Stelle 23' des Blattfederabschnittes 71 auf. Die Auflagestelle 23' des Blattfederabschnittes 71 weist von der links und rechts liegenden Schraubverbindungsstelle 22' denselben Abstand auf. Auf diesem zweiten Armkreuz, das, wie gezeigt ist, um einen Winkel relativ zum untersten Armkreuz gedreht ist, der die Hälfte des Winkelabstandes der Arme 4 bzw. 5 beträgt, liegt ein weiterer Blattfedersatz, enthaltend die Blattfederabschnitte 81, 82 und 83. Währenddem die zuerst beschriebenen Blattfederabschnitte ein mit der Spitze oben liegendes Dreieck beschreiben, steht nun dieses obere Dreieck auf der Spitze. Die Blattfederabschnitte 81, 82 und 83 dieses Dreiecks sind beispielsweise 24'''' mit der Stelle 24'' der Tragplatte 2 oder bei 25''' mit der Stelle 25'' der Platte 2 verschraubt. Zudem liegen die Blattfederabschnitte an ihren Stellen 12''' auf den Leisten 12'' auf.

Auf diesem Blattfedersatz liegt nun das oberste Armkreuz auf. Es weist drei Arme 6 und Tragplatten 3 auf. Die Auflagestelle dieses Armkreuzes auf den darunter liegenden Blattfederabschnitten ist beispielsweise mit 26'''' bezeichnet und die Auflagestelle auf dem entsprechenden darunter liegenden Blattfederabschnitt 81 mit 26'''. Dieses oberste Armkreuz trägt nun unmittelbar die abzustützende Maschine. Dazu können rein beispielsweise die Tragplatten 3 die Verbindungsstelle mit dem Maschinenrahmen bilden. Gemäß einer vorteilhaften Ausführung ist jedoch beim obersten Armkreuz ein nivellierbares Element angeordnet (und ebenfalls durch die Zentrierstange 10 geführt). Dieses Element kann beispielsweise aus Kugel und Kalotte bestehen. Somit ist beim beschriebenen Schwingungsdämpfer unten einerseits eine Dreipunktabstützung vorhanden, so daß eine selbsttätige Anpassung an die Unterlage vorhanden ist und oben eine über ein Gelenk erfolgende Verbindung mit dem zu tragenden Maschinenrahmen, so daß der Schwingungsdämpfer irgendwelche Stellungsunterschiede zwischen Maschinenrahmen und Boden ausgleichen kann.

In Fig. 4 ist eine weitere beispielsweise Ausführung dargestellt. Das untere Armkreuz ist wieder durch drei starre Arme 4 mit den Tragplatten 1 gebildet. Die Leisten sind mit 12 angedeutet. Der darüber liegende Blattfedersatz ist kreisförmig und setzt sich insbesondere aus drei kreisringabschnittförmigen Blattfederabschnitten 91, 92 und 93 zusammen. Der Blattfederabschnitt 91 ist beispielsweise bei 22' über den Schraubenbolzen mit der Stelle 22 der darunter liegenden Tragplatte verbunden und der Blattfederabschnitt 92 beispielsweise bei 21' mit der Stelle 21 der darunter liegenden Tragplatte 1 verbunden. Die Blattfederabschnitte stützen sich an den Stellen 12' auf die jeweils darunter liegenden Leisten 12 ab. Über dem Blattfedersatz ist das weitere Armkreuz angeordnet. Dieses setzt sich aus den Armen 5 und den Tragplatten 2 zusammen. Die Auflagestellen sind mit x bezeichnet. Die Auflagestelle 23'' des Armes 5 liegt jedoch weiter außen, hier unter der Tragplatte 2, an welcher Stelle sich dieses Armkreuz auf 23' des Blattfederabschnittes 91 abstützt. Da nun die Stelle 23', bei welcher die Kraft an der Blattfeder 91 angreift, nicht auf der die zwei Verbindungsstellen 22' verbindenden Gerade liegt, erfolgt hier unter Last eine Verwindung des Blattfederabschnittes 91 eher als eine Durchbiegung. Der Schwingungsdämpfer muß also nicht in jeder Ausführung sich durchbiegende Blattfedern aufweisen, es sind auch, wie hier beispielsweise gezeigt, Verwindungsfedern möglich.

Auf dem Armkreuz mit den Armen 5 liegt der weitere Blattfedersatz, enthaltend die Blattfederabschnitte 91, 92 und 93, auf. Der Blattfederabschnitt 91 ist beispielsweise bei 24''' mit der Stelle 24'' der darunter liegenden Tragplatte 2 verschraubt und der Blattfederabschnitt 93 ist beispielsweise bei 25''' mit 25'' der Tragplatte 2 verschraubt. Die Auflagestellen der Blattfederabschnitte sind mit 12''' und die darunter liegenden Leisten mit 12'' angedeutet. Es soll hier wiederholt werden, daß bei diesen Verschraubungen Änderungen der Spannung der Blattfedern durchführbar sind. Zuoberst liegt wieder das Armkreuz mit den Armen 6 und der Tragplatte 3. Hier stützt sich der Arm 6 über die Tragplatte 3 bei der Stelle 26'''' auf die Stelle 26'''' des darunter gelegenen Blattfederabschnittes 91 ab.

Obwohl der Übersichtlichkeit halber zuoberst ein Armkreuz gezeichnet ist, das gleich den darunter liegenden Armkreuzen ausgebildet ist, soll nochmals bemerkt werden, daß dieses nur eine beispielsweise Ausführung ist und wesentlich nur die Dreipunktauflage des obersten starren Elementes notwendig ist, welches, wie oben erwähnt, durch Kugel und Kalotte gebildet sein kann.

Anstelle des Armkreuzes mit drei Armen und entsprechend im Dreieck vorliegenden Blattfederabschnitten sind je nach Anwendungsgebiet weitere Ausführungen möglich.

In Fig. 5 ist beispielsweise ein fünf Arme 4 mit den Tragplatten 1 enthaltendes Armkreuz dargestellt. Die darüber liegenden Blattfederabschnitte 71, 72, 73, 74 und 75 beschreiben ein gleichseitiges Fünfeck. Die Schraubverbindungsstellen sind auch hier mittels Kreisen und die Auflagestellen auf den Blattfederabschnitten mittels x angedeutet. Die Auflagestellen der Blattfederabschnitte sind mit 12' und die Leisten mit 12 angedeutet.

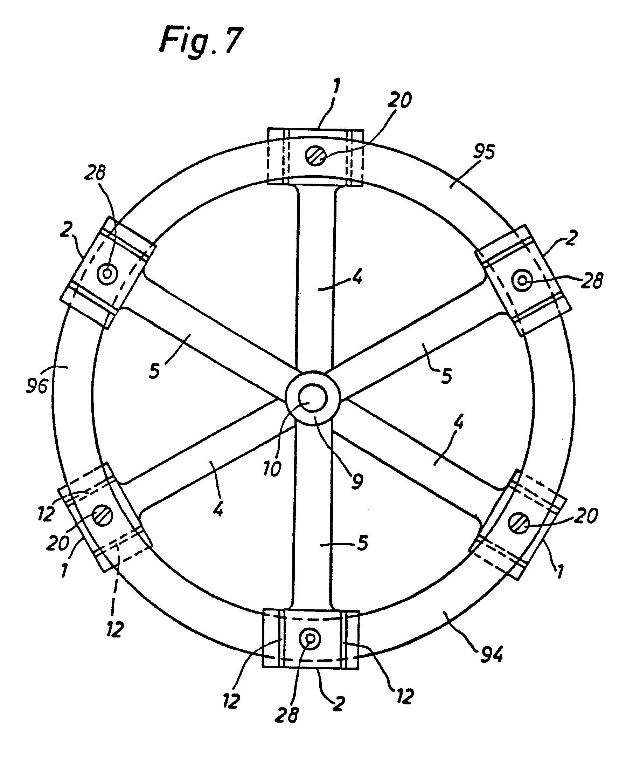

In Fig. 6 ist ein vierarmiges Armkreuz mit den Armen 4 und Tragplatten 1 sowie ein darüber liegender Blattfedersatz in Form von ein Quarat beschreibende Blattfederabschnitte 71, 72, 73 und 74 gezeichnet. Diese Blattfederabschnitte sind bei den mit den Kreisen gezeigten Stellen mit den darunter liegenden Tragplatten 1 verschraubt und die Auflagestellen auf den Blattfederabschnitten sind wieder mit einem x dargestellt. Die Auflagestellen der Blattfederabschnitte sind mit 12' und die Leisten mit 12 bezeichnet.

In Fig. 7 ist eine weitere Ausführung mit kreisringförmigen Blattfederabschnitten dargestellt. Der Unterschied zwischen dieser Ausführung der Fig. 7 und den vorgängigen Ausführungen ist, daß die Blattfederabschnitte einstückig verbunden sind, d. h., daß ein ununterbrochenen Kreisring aus Federstahl vorliegt. Das unterste Armkreuz (vergleiche auch mit Fig. 1) weist drei Arme 4 sowie die dazugehörigen Tragplatten 1 auf. Die Tragplatten sind mit den Stützleisten 12 versehen. Zudem sind Stange 10 und Führungsbüchse 9 ebenfalls schematisch angedeutet. Auf diesem untersten Armkreuz liegt nun die kreisringförmige Blattfeder, die sich aus den Abschnitten 94, 95 und 96 zusammensetzt. Die Bezugsziffer 20 bezeichnet Kopfschrauben, (hier mit Schraubenzieher anzuziehende) mittels welchen die Verbindung zwischen den Blattfederabschnitten 94, 95 und 96 mit dem darunter liegenden Armkreuz gebildet ist. Als Unterschied zu den vorgängigen Ausführungen ist hier nur ein Schraubenbolzen 20 zwischen jeweils zwei Tragleisten 12 vorhanden.

Auf dem Blattfederkreisring liegt nun das nächst höhere Armkreuz, enthaltend die Arme 5 und die Tragplatten 2. Gezeichnet sind wieder die Leisten 12 auf den Tragplatten 2. Die Bezugsziffer 28 bezeichnet das Loch mit dem Innengewinde zur Aufnahme des Schraubenbolzens, der den nicht gezeichneten, darüber gelegenen Kreisring mit dem Armkreuz 5, 2 verbindet.

Obwohl diese Ausführung mit einstückig miteinander verbundenen Blattfederabschnitten in Form eines Kreisringes dargestellt ist, kann hier auch ein Vieleck gemäß den vorgängigen Ausführungen vorhanden sein. Dabei ist es offensichtlich nicht notwendig, daß die übereinander gelegenen Blattfedersätze jeweils genau dieselben Dimensionen aufweisen. Beim Ausstanzen der in sich geschlossenen streifenförmigen Dreiecke könnte zur Vermeidung unnötigen Abfalles Dreiecke unterschiedlicher Seitenlängen ausgestanzt werden, so daß sich ein pyramidenförmiger Schwingungsdämpfer ergeben würde.

**Patentansprüche**

1. Schwingungsdämpfer der abwechselnd parallel übereinander angeordnet starre Armkreuze (1, 4; 2, 5; 3, 6) und Blattfedersätze (71-73; 81-83; 71-74; 71-75; 91-93; 94-96) ausweist, wobei

die Armkreuze (1, 4; 2, 5; 3, 6) in der Mitte jeweils eine Führungsbüchse (9) enthalten, die Führungsbüchsen (9) von einer senkrecht zu den Armkreuzen (1, 4; 2, 5; 3, 6) verlaufenden, dieselben gegenseitig führenden und gegen eine relative Verdrehung sichernden Stange (10) durchsetzt sind, und die Armkreuze (1, 4; 2, 5; 3, 6) an den äußeren Enden ihrer Arme (4, 5, 6) angeordnete Tragplatten (1, 2, 3) mit Stützen (12) und mindestens einem Verbinder für die Blattfedersätze (71-73; 81-83; 71-74; 71-75; 91-93; 94-96) aufweisen,

die Blattfedersätze (71-73; 81-83; 71-74; 71-75; 91-93; 94-96) jeweils aus Blattfederabschnitten (71, 72, 73, 74, 75, 81, 82, 83, 91, 92, 93, 94, 95, 96) zusammengesetzt sind, von denen jeder in seinen beiden Endbereichen in Linienberührung auf einer jeweiligen Stütze (12) des jeweils darunter liegenden Armkreuzes (1, 4; 2, 5; 3, 6) aufliegt und im über die Auflagestelle überstehenden Abschnitt über einen der Verbinder (20) mit der zugehörigen Tragplatte (1, 2, 3) verbunden ist, und

die Arme (4, 5, 6) eines jeweiligen Armkreuzes (1, 4; 2, 5; 3, 6) ihrerseits in jeweils einer Linienberührung an einer zwischen den beiden Auflagestellen liegenden Stelle auf dem jeweiligen Blattfederabschnitt (71, 72, 73, 74, 75, 81, 82, 83, 91, 92, 93, 94, 95, 96) eines darunterliegenden Blattfedersatzes aufliegen.

2. Schwingungsdämpfer nach Anspruch 1, dadurch gekennzeichnet, daß die auf den Tragplatten (1, 2) angeordneten Stützen (12) senkrecht zu den Mittellinien der auf ihnen ruhenden Blattfederabschnitte verlaufende Leisten (12) sind und die Verbinder die überstehenden Abschnitte der Blattfederabschnitte durchsetzende, in den Tragplatten eingeschraubte Schraubenbolzen (20) sind.

3. Schwingungsdämpfer nach Anspruch 1 oder 2, dadurch gekennzeichnet, daß die zum Aufliegen auf dem jeweiligen Untergrund bestimmten Tragplatten (1) mit einem Gleitschutz (13) ausgerüstet sind.

4. Schwingungsdämpfer nach einem der Ansprüche 1 bis 3, dadurch gekennzeichnet, daß die Arme der Armkreuze auf dem jeweiligen Blattfederabschnitt gleich weit von dessen Auflagestellen auf den Stützen entfernt aufliegen.

5. Schwingungsdämpfer nach einem der Ansprüche 1 bis 4, dadurch gekennzeichnet, daß die Arme jedes Armkreuzes jeweils im gleichen Winkelabstand voneinander angeordnet sind und jedes Armkreuz relativ zum nächstliegenden Armkreuz um einen Winkel gedreht ist, der der Hälfte des Winkelabstands zweier benachbarter Arme entspricht.

6. Schwingungsdämpfer nach einem der Ansprüche 1 bis 5, dadurch gekennzeichnet, daß die Blattfederabschnitte eines Blattfedersatzes geradlinig verlaufende Blattfederstreifen (71, 72, 73, 74, 75, 81, 82, 83) sind, welche den jeweiligen sich darauf abstützenden starren Arm (4, 5, 6) rechtwinklig unterkreuzen.

7. Schwingungsdämpfer nach einem der Ansprüche 1 bis 5 dadurch gekennzeichnet, daß die Blattfederabschnitte eines Blattfedersatzes (91-93; 94-96) krummlinig verlaufen.

8. Schwingungsdämpfer nach Anspruch 7, dadurch gekennzeichnet, daß die Blattfederabschnitte Kreisringabschnitte (91, 92, 93) sind, und daß sich die Armkreuze über die Tragplatten (2, 3) auf den jeweils darunter liegenden kreisringabschnittförmigen Blattfederabschnitten (91, 92, 93) abstützen.

9. Schwingungsdämpfer nach Anspruch 7, dadurch gekennzeichnet, daß die Blattfederabschnitte Abschnitte (94, 95, 96) eines ununterbrochenen Kreisringes sind, deren Enden jeweils mittels eines gemeinsamen, zwischen zwei Leisten (12) angeordneten Verbinders (20) mit der darunter liegenden Tragplatte verbunden sind, und daß sich die Armkreuze (1, 4, 5) über die Tragplatten (1) auf die jeweils darunter liegenden kreisringförmigen Blattfederabschnitte abstützen.

10. Schwingungsdämpfer nach einem der Ansprüche 1 bis 6, dadurch gekennzeichnet, daß die Blattfederabschnitte (71-74; 71-75) ein Vieleck beschreiben und daß die Armkreuze eine Anzahl Arme (4) aufweisen, die gleich der Zahl der Ecken des Vielecks ist.

## Claims

1. A vibration damper which comprises, arranged alternately in parallel superposed relationship, rigid spiders (1, 4; 2, 5; 3, 6) and sets of blade springs (71-73; 81-83; 71-74; 71-75; 91-93; 94-96), wherein

the spiders (1, 4; 2, 5; 3, 6) each include at the centre a respective guide bush (9), passing through the guide bushes (9) is a bar (10) which bends perpendicularly to the spiders (1, 4; 2, 5; 3, 6) and which guides them relative to each other and which prevents them from rotating relative to each other, and the spiders (1, 4; 2, 5; 3, 6) have carrier plates (1, 2, 3) arranged at the outer ends of their arms (4, 5, 6), with supports (12) and at least one connector for the sets of blade springs (71-73; 81-83; 71-74; 71-75; 91-93; 94-96),

the sets of blade springs (71-73; 81-83; 71-74; 71-75; 91-93; 94-96) are each made up of blade spring portions (71, 72, 73, 74, 75, 81, 82, 83, 91, 92, 93, 94, 95, 96), each of which, in its two end regions, rests in line contact on a respective support (12) of the respective spider (1, 4; 2, 5; 3, 6) disposed therebeneath, and is connected to the associated carrier plate (1, 2, 3), in the portion which projects beyond the contact location, by way of one of the connectors (20), and

the arms (4, 5, 6) of a respective spider (1, 4; 2, 5; 3, 6) in turn rest with respective line contact at a location between the two contact locations on the respective blade spring portion (71, 72, 73, 74, 75, 81, 82, 83, 91, 92, 93, 94, 95, 96) of a set of blade springs disposed therebelow.

2. A vibration damper according to claim 1 characterised in that the supports (12) which are arranged on the carrier plates (1, 2) are bars (12) which extend perpendicularly to the centre lines of the blade spring portions resting thereon and the connectors are screw bolts (20) which pass through the projecting portions of the blade spring portions and which are screwed into the carrier plates.

3. A vibration damper according to claim 1 or claim 2 characterised in that the carrier plates (1) which are intended to rest on the respective support surface are provided with non-slip means (13).

4. A vibration damper according to one of claim 1 to 3 characterised in that the arms of the spiders rest on the respective blade spring portion at an equal distance from the locations of support of same on the supports.

5. A vibration damper according to one of claim 1 to 4 characterised in that the arms of each spider are each arranged at the same angular spacing from each other and each spider is turned relative to the next spider through an angle which corresponds to half the angular spacing of two adjacent arms.

6. A vibration damper according to one of claim 1 to 5 characterised in that the blade spring portions of a set of blade springs are blade spring strips (71, 72, 73, 74, 75, 81, 82, 83) which extend in a straight line and which cross at right angles beneath the respective rigid arm (4, 5, 6) which is supported thereon.

7. A vibration damper according to one of claim 1 to 5 characterised in that the blade spring portions of a set of blade springs (91-93; 94-96) extend in a curved configuration.

8. A vibration damper according to claim 7 characterised in that the blade spring portions are circular ring portions (91, 92, 93) and that the spiders are supported by way of the carrier plates (2, 3) on the respective blade spring portions (91, 92, 93) which are in the form of circular ring portions and which are disposed therebelow.

9. A vibration damper according to claim 7 characterised in that the blade spring portions are portions (94, 95, 96) of an uninterrupted circular ring, the ends of which portions are connected by means of a respective common connector (20) arranged between two bars (12) to the carrier plate which is disposed therebelow, and that the spiders (1, 4, 5) are supported by way of the carrier plates (1) on the respective blade spring portions which are in the form of a circular ring and which are disposed therebelow.

10. A vibration damper according to one of claim 1 to 6 characterised in that the blade spring portions (71-74; 71-75) describe a polygon and that the spiders have a number of arms (4) which is equal to the number of corners of the polygon.

## Revendications

1. Amortisseur de vibrations comportant des croisillons rigides (1, 4; 2, 5; 3, 6) et des ensembles de ressorts à lames (71-73; 81-83; 71-74; 71-75; 91-93; 94-96), superposés en alternance en parallèle, et dans lequel

les croisillons (1, 4; 1, 2, 5; 3, 6) comportent en leur centre des douilles de guidage respectives (9), qui sont traversées par une barre (10) perpendiculaire aux croisillons (1, 4; 2, 5; 3, 6), guidant ces derniers les uns par rapport aux autres et réalisant un blocage contre une rotation relative, et les croisillons (1, 4; 2, 5; 3, 6) comportent des plaques de support (1, 2, 3) disposées sur les extrémités extérieures de leurs bras (4, 5, 6) et comportant des appuis (12) et au moins un organe de liaison pour les ensembles de ressorts à lames (71-73; 81-83; 71-74; 71-75; 91-93; 94-96),

les ensembles de ressorts à lames (71-73; 81-83; 71-74; 71-75; 91-93; 94-96) sont formés respectivement par la réunion de sections de ressorts à lames (71, 72, 73, 74, 75, 81, 82, 83, 91, 92, 93, 94, 95, 96), dont chacune prend appui, au niveau de ses deux zones d'extrémité, selon un contact linéaire, sur un appui respectif (12) du croisillon respectivement sous-jacent (1, 4; 2, 5; 3, 6) et est relié, dans la partie située en saillie au-delà du point d'appui, à la plaque de support associée (1, 2, 3) par l'intermédiaire de l'organe de liaison (20), et

les bras (4, 5, 6) d'un croisillon respectif (1, 4; 2, 5; 3, 6) s'appliquant pour leur part, en un emplacement situé entre les deux points d'appui, sur la section respective de ressort à lame (71, 72, 73, 74, 75, 81, 82, 83, 91, 92, 93, 94, 95, 96) d'un ensemble sous-jacent de ressorts à lames.

2. Amortisseur de vibrations suivant la revendication 1, caractérisé par le fait que les appuis (12) disposés sur les plaques de support (1, 2) sont des barrettes (12) perpendiculaires aux axes médians des sections de ressorts à lames prenant appui sur ces appuis, et les organes de liaison sont des boulons (20) traversant les parties saillantes des sections de ressorts à lames et vissés dans les plaques de support.

3. Amortisseur de vibration suivant la revendication 1 ou 2, caractérisé par le fait que les plaques de support (1) destinées à s'appliquer sur le soubassement respectif sont équipées d'un dispositif antidérapant (13).

4. Amortisseur de vibrations suivant l'une des revendications 1 à 3, caractérisé par le fait que les bras des croisillons s'appuient sur les éléments de ressorts à lames respectifs, à des distances identiques de leurs points d'appui sur les appuis.

5. Amortisseur de vibrations suivant l'une des revendications 1 à 4, caractérisé par le fait que les bras de chaque croisillon sont disposés en étant équidistants angulairement les uns des autres et que chaque croisillon est décalé par rapport au croisillon immédiatement suivant d'un angle qui correspond à la moitié de l'intervalle angulaire entre deux bras voisins.

6. Amortisseur de vibrations suivant l'une des revendications 1 à 5, caractérisé par le fait que les sections de ressorts à lames d'un ensemble de ressorts à lames sont des bandes rectilignes de ressorts à lames (71, 72, 73, 74, 75, 81, 82, 83) qui croisent à angle droit les bras rigides respectifs (4, 5, 6) qui s'appuient sur ces bandes de ressorts à lames.

7. Amortisseur de vibrations suivant l'une des revendications 1 à 3, caractérisé par le fait que les sections de ressorts à lames d'un ensemble de ressorts à lames (91-93; 94-96) sont courbes.

8. Amortisseur de vibrations suivant la revendication 7, caractérisé par le fait que les sections de ressorts à lames sont des sections d'anneaux circulaires (91, 92, 93) et que les croisillons s'appuient par l'intermédiaire des plaques de support (2, 3) sur les sections de ressorts à lames respectifs sous-jacentes (91, 92, 93) en forme de sections d'anneaux circulaires.

9. Amortisseur de vibrations suivant la revendication 7, caractérisé par le fait que les sections de ressorts à lames dans les sections (94, 95, 96) d'un anneau circulaire ininterrompu, dont les extrémités sont reliées à la plaque de support sous-jacente respectivement au moyen d'un organe commun de liaison (20) disposé entre deux barrettes (12), et que les croisillons (1, 4, 5) prennent appui par l'intermédiaire des blocs de support (1) sur les sections respectives sous-jacentes de ressorts à lames en forme d'anneaux circulaires.

10. Amortisseur de vibrations suivant l'une des revendications 1 à 6, caractérisé par le fait que les sections de ressorts à lames (71-74; 71-75) délimitent un polygone et que les croisillons possèdent un nombre de bras (4), qui est égal au nombre des angles du polygone.

**Fig.1**

**Fig. 2**

Fig.3    Fig.4    Fig.5    Fig.6

# Fig. 7